# EUROPEAN PATENT SPECIFICATION

(11) **EP 0 425 236 B1**
(45) Date of publication and mention of the grant of the patent: **19.01.1994**
(21) Application number: 90311591.3
(22) Date of filing: 23.10.1990
(51) Int. Cl.: F02M 61/12, F02M 61/16

(54) **Fuel injection nozzles for internal combustion engines**
Kraftstoffeinspritzdüse für Brennkraftmaschinen
Buse d'injection de combustible pour moteurs à combustion interne

(30) Priority: 26.10.1989 GB 8924118
(43) Date of publication of application: 02.05.1991
(73) Proprietor: LUCAS INDUSTRIES PUBLIC LIMITED COMPANY, Solihull, West Midlands B91 3TX (GB)
(72) Inventor: Turner, Ronald Frederick, London, W12 9SD (GB)
(74) Representative: Valentine, Francis Anthony Brinsley

(56) References cited:
- EP-A- 0 363 142
- FR-A- 2 211 601
- GB-A- 2 173 856
- US-A- 3 511 442

## Description

This invention relates to fuel injection nozzles for internal combustion engines, the nozzles being of the kind comprising a nozzle body having a nozzle body tip formed with at least one spray hole;
a bore extending from an end face of the body to the nozzle body tip, the bore having first and second portions connected by an undercut portion, the first portion extending from the end face; and
a fuel supply passage comprising first and second fuel passage portions, the first fuel passage portion being straight and extending from an inlet in the end face and the second fuel passage portion extending from the undercut bore portion to intersect the first fuel passage portion, the intersection including the portion of the second fuel passage portion closest to the end face.

In a fuel injection nozzle, an injection valve member is slidably supported within the nozzle body, a cylindrical portion of the valve member being a close sliding fit within the first bore portion and a reduced diameter portion of the valve member extending within the second bore portion. The end of the reduced diameter portion seats in the closed condition of the valve on a valve seat formed in the nozzle body to prevent access of fuel from the second portion of the bore to the one or more spray holes formed in the tip portion of the nozzle body.

In a conventional nozzle, the first fuel passage portion is formed by a drilling from an offset point on the end face of the nozzle body, which extends at a small angle to the axis of the bore so as to break into the undercut portion of the bore.

The undercut portion must therefore comprise a deep annular recess, or fuel gallery, in the internal wall of the bore. As a result of this method of construction it is not possible to maintain sufficient thickness of metal in the wall of the nozzle body (particularly of the web between the fuel passage and the undercut bore portion or fuel gallery) to ensure that the nozzle is strong enough for the highest operating fuel pressures while ensuring that the drilling communicates with the fuel gallery with sufficient fuel flow cross section.

It would in principle be possible to increase the strength of the nozzle body by increasing its overall physical dimensions. There is a need however to retain the same outer dimensions as prior injector nozzle bodies, both in order to retain a standard size of nozzle fitting, and to maintain advantageously compact dimensions.

GB 2173856 illustrates a known fuel injection nozzle in which the requirement for a deeply undercut bore portion is avoided. In this nozzle a second fuel passage portion or fuel collecting chamber is formed as an eccentric radial extension of the undercut bore portion. The first fuel supply passage portion then extends from the end face at a small angle to the axis of the bore and opens into the radially outer surface of the fuel collecting chamber rather than into the undercut portion. The web of material between the first fuel passage portion and the first bore portion and undercut bore portion is thus thickened and strengthened. However, since the radially outer surface of the fuel collecting chamber is parallel to the bore axis and the first fuel passage portion opens into this outer surface at a small angle, a thin web of material is formed between the first fuel passage portion and the collecting chamber. In operation of the nozzle this thin web of material is very likely to fracture and thus damage the nozzle.

US 3511442, which forms the basis for the preamble of claim 1, describes a fuel injection nozzle body having a fuel passage construction similar to that described in GB 2173856, but in which the eccentric radial extension or second fuel passage portion comprises a concavely curved pocket extending from the undercut bore portion. A straight drilled first fuel passage portion extends from the end face of the nozzle body and intersects the portion of the second fuel passage portion nearest to the end face of the nozzle body. The formation of a sharp web between the first and second fuel passage portions is thus avoided.

The invention provides a method of making a fuel injection nozzle body characterised in that the second fuel passage portion is formed from within the undercut bore portion and has a circular cross-section and similar cross-sectional area to the first passage portion.

This prevents the formation of thin residual webs, which would be liable to fracture, in the region of the intersection of the first and second fuel passage portions.

Either the first or the second fuel passage portion may be formed before the other. If, however, second fuel passage portion is to be formed by EDM or ECM, then it may be formed advantageously after the drilling of the first fuel passage portion since EDM and ECM do not lead to the formation of burrs and can remove existing burrs. The opening of the first fuel passage portion into the second fuel passage portion may not then require further deburring.

If, however, deburring or additional rounding of the intersection of the fuel passage portions are required then the conventional deburring method of forcing an abrasive paste through the injector fuel passage and bore may be used.

The central bore of a fuel injection nozzle formed according to the invention may first be machined conventionally, the undercut portion needing only to be recessed sufficiently deeply to permit subsequent honing or grinding of the first bore portion to form a close sliding fit with the valve member. The second fuel passage portion may then be extended radially in the direction of the first fuel passage portion by any of a variety of means including machining, grinding, electrochemical machining (ECM), or electrical discharge machining (EDM). The first fuel passage portion itself may be formed by drilling.

In the nozzle body according to the invention the use of a second fuel passage portion of smaller cross-section than, for example, the concavely curved pocket of the closest prior art leads to increased nozzle body strength both because less material need be removed from the nozzle body wall and because the thickness of the web between the first fuel passage portion and the first bore portion may be increased. The diameter of the undercut bore portion may also advantageously be decreased compared with conventional nozzle bodies. The resulting improved strength may advantageously allow higher fuel delivery pressures to be used as required in modern engine designs.

Further preferred and advantageous features of the invention are defined in the appendant claims.

Embodiments of the invention will now be described by way of example with reference to the accompanying drawings, in which:
Figure 1 is an axial section of a prior art fuel injector nozzle comprising a radially extended undercut bore portion and an inclined first fuel passage portion;
Figure 2 is a radial section along II-II in figure 1;
Figure 3 shows a fuel injector valve member for the injector nozzles of figures 1 and 2 or 4A and 5 or 4B;
Figure 4A is an axial section of a fuel injector nozzle comprising an undercut portion extended by a radial, axially inclined second fuel passage portion.
Figure 4B is an axial section of a fuel injector nozzle comprising an undercut portion extended by a radial second fuel passage portion;
Figure 5 is a section along V-V in figure 4A;
Figure 6 shows a shaped electrode for forming by EDM the second fuel passage portion of the embodiment of figures 4A and 5; and
Figure 7 is a longitudinal section of a shaped electrode for forming by ECM or EDM the second fuel passage portion of the embodiment of figures 4A and 5;

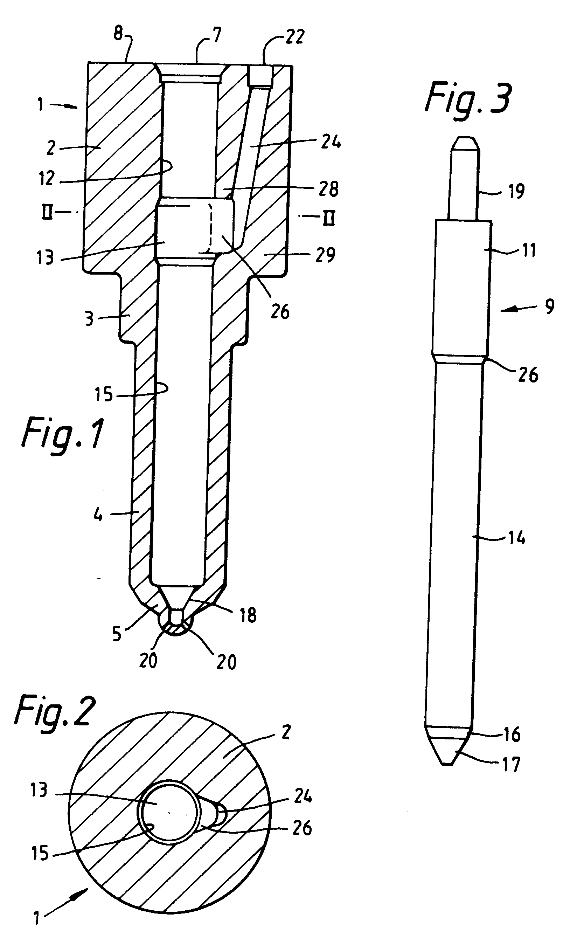

The fuel injection nozzle shown in Figures 1 and 2 is of a known type and is for use in a compression-ignition engine. It comprises a nozzle body 1 in the form of a body of revolution having a relatively large diameter upper end 2, an intermediate diameter portion 3 and a nozzle forming portion 4 of further reduced diameter, terminating in a nozzle tip 5.

An axial bore extends from an entry 7 in the free end surface 8 of the nozzle body portion 2 to the nozzle tip 5. To be mounted within the bore is a valve member 9, shown in Figure 3, which has a cylindrical portion 11 which is a very close sliding fit in a first bore portion 12 leading from the entry 7 into an undercut bore portion 13 formed by an enlargement of the bore. The remainder 14 of the valve member 9 is of reduced diameter and extends through a second bore portion 15 within the body portions 3 and 4 to terminate in a valve tip formed by first and second frusto-conical surfaces 16 and 17, the junction of these two surfaces seating on a frusto-conical seating surface 18.

The valve member 9 is resiliently urged for example by a strong spring and thrust washer located on a pin 19 at the end of the valve member 9 into the closed condition in which it seats on the seating 18, thereby closing off access from the clearance space between the valve member portion 14 and the second bore portion 15, to the fuel spray holes 20.

Fuel is delivered to the fuel injector nozzle 1 at the entrance 22 to a first fuel supply passage portion 24, which extends within the wall of the nozzle body 1 from the end face 8. The first fuel passage portion 24 opens into a second fuel passage portion, or extension 26 to the undercut bore portion 13. When fuel is delivered to the nozzle under pressure by a fuel injection pump, the fuel pressure in the undercut portion 13 acts on an annular face 26 between the wider portion 11 and the narrower portion 14 of the valve member 9. A force is thus exerted on the valve member 9 which acts against that exerted by the strong spring located on the pin 19 at the end of the valve member 9. When sufficient fuel pressure is applied, the valve member 9 is raised from the frusto-conical valve seating surface 18, allowing fuel to flow under pressure to the spray holes 20.

The first fuel supply passage portion 24 is a straight drilled passage, inclined slightly to the bore axis, and opens into the second fuel passage portion, or radial extension 26 of the undercut bore portion 13. The radial extension 26 may be formed by electrochemical machining (ECM) or electrical discharge machining (EDM) by using a shaped electrode inserted along the first bore portion 12. Alternatively the extension 26 may be formed by a cutting or grinding tool inserted along the first bore portion 12. The extension to the undercut portion is of the same axial length as the undercut portion 13. The opening between the fuel passage 24 and the undercut portion 13 is thus enlarged as far as possible to improve fuel flow. The end of the web 28 between the first fuel passage portion 24 and the first bore portion 12 is also rounded and broadened, improving the fuel flow at the entrance to the undercut portion 13.

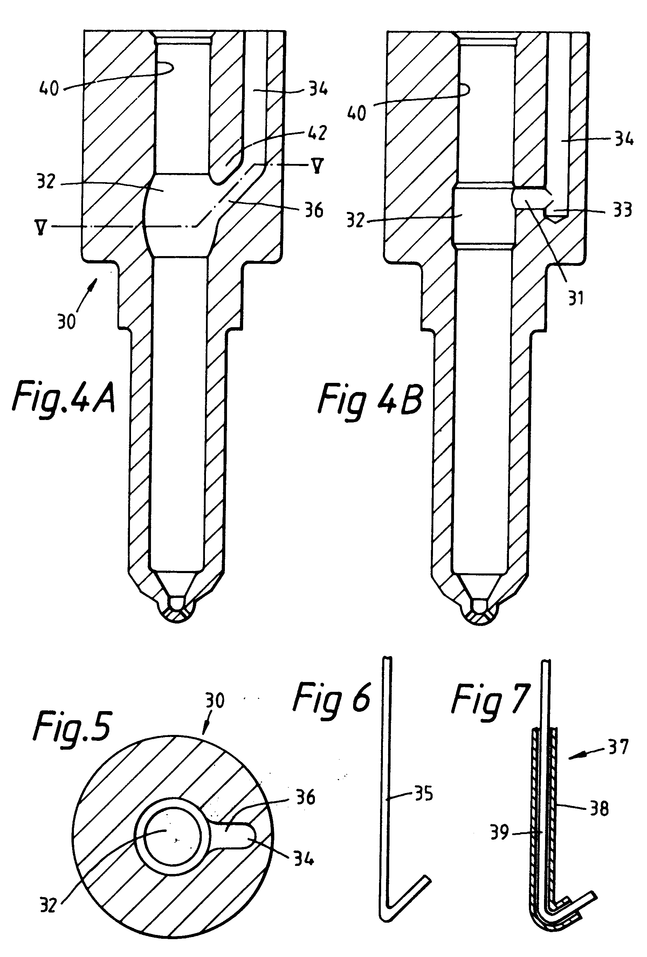

A first embodiment of the invention is shown in figures 4A and 5. These figures show a fuel injection nozzle body 30, the valve member for which and the operation of which are identical to those of the known nozzle of figure 1. The construction of the undercut bore portion 32 and the fuel passage 34, 36 are different however.

The undercut portion 32 is machined conventionally and the second fuel passage portion, or extension 36 is then formed by EDM, using a shaped electrode. A suitable electrode 35 is shown in figure 6. This electrode 35 can be inserted along the first bore portion 40 and the extension 36 formed by EDM using the pre-shaped electrode tip.

A further suitable electrode, either for ECM or EDM, is shown in figure 7. This electrode 37 comprises a rigid insulating tube 38 within which a deformable, electrically conducting electrode element 39 slidably extends. The rigid insulating tube 38 may be inserted along the first bore portion 12 and comprises a curved end, shaped so that the deformable conducting element may be fed along the tube during machining to emerge from the curved end of the tube 38 at a predetermined angle for machining the extension 36 to the undercut portion. During ECM or EDM some removal of material from the electrode tip occurs, so by feeding the electrode element 39 along the tube 38, the electrode material lost may be replaced during machining.

The first fuel passage portion 34 is formed by drilling, and intersects the end of the extension 36 formed by EDM or ECM from within the undercut portion 32. The thickness of the web 42 between the fuel passage 34, 36 and the first bore portion 40 and of the nozzle body wall 43 are thus advantageously increased, thereby strengthening the nozzle body 30 around the fuel passage 34.

Either the extension to the undercut portion 32 or the first fuel passage portion 34 may be formed first.

The extension 36 of the undercut portion shown in figures 4A and 5 extends both radially from the undercut portion 32 and is also inclined axially. This improves the flow of fuel from the first fuel passage portion 34 to the undercut portion 32. However the extension 36 could in principle be formed at any axial inclination. For example figure 4B shows as a second embodiment of the invention a nozzle body in which a second fuel passage portion, or extension, 31 extends radially from the undercut portion 32. Similarly, although the first fuel passage portion 34 is shown as parallel to the bore axis, it could be inclined to this axis to further improve fuel flow at the junction of the first fuel passage portion 34 and the extension 36 but this would also reduce the thickness of the web 42.

It should also be noted that, as shown in figure 4B, the extension 31 does not necessarily have to intersect the end 33 of the first fuel passage portion 34. This would however be detrimental to the fuel flow.

## Claims

1. A method of making a fuel injection nozzle body for an internal combustion engine, the nozzle body (30) having;
a nozzle body tip (5) formed with at least one spray hole (20);
a bore extending from an end face (8) of the body to the nozzle body tip, the bore having first (40) and second portions connected by an undercut portion (32), the first portion extending from the end face; and
a fuel supply passage comprising first and second fuel passage portions, the first fuel passage portion (33,34) being straight and extending from an inlet in the end face and the second fuel passage portion (31) extending from the undercut bore portion to intersect the first fuel passage portion, the intersection including the portion of the second fuel passage portion closest to the end face;
characterised in that the second fuel passage portion (31), (36) is formed from within the undercut bore portion and has a circular cross-section and similar cross-sectional area to the first passage portion.

2. A method according to claim 1, in which the second fuel passage portion is formed by electrochemical machining (ECM) or electrical discharge machining (EDM).

3. A method according to claim 1 or 2, in which the first fuel passage portion is formed before the second fuel passage portion.

4. A method according to any preceding claim, in which the second fuel supply passage portion (31), (36) is straight.

5. A method according to any preceding claim, in which the nozzle body is fabricated as a single component.

## Patentansprüche

1. Verfahren zur Herstellung eines Kraftstoffeinspritzventils für eine Brennkraftmaschine, mit einem Ventilkörper (30), welcher einen geformten Ventilkopf (5) mit einer Sprühbohrung (20) besitzt, einer sich von einer Stirnfläche (8) des Ventilkörpers bis zu dem Ventilkopf ausbreitenden Bohrung, welche einen ersten (40) und einen zweiten Bereich, verbunden durch einen hinterschnittenen Bereich (32) aufweist, wobei sich der erste Bereich von der Stirnfläche her erstreckt und einer Kraftstoffzuführung mit einem ersten und zweiten Kraftstoffdurchlaßbereich, der erste Kraftstoffdurchlaßbereich (33, 34) verläuft gerade und erstreckt sich von einer Einlauföffnung in der Stirnflache und der zweite Kraftstoffdurchlaßbereich (31) erstreckt sich ausgehend von dem hinterschnittenen Bohrungsbereich bis zum Kreuzen des ersten Kraftstoffdurchlaßbereiches, wobei der Kreuzungsbereich den durch die Stirnfläche geschlossenen Bereich des zweiten Kraftstoffdurchlaßbereiches mit umfaßt,
dadurch gekennzeichnet,
daß der zweite Kraftstoffdurchlaßbereich (31, 36) von dem hinterschnittennen Bohrungsbereich ausgehend von innen hergestellt wird und einen kreisförmigen Durchmesser und eine gleiche Querschnittsfläche wie der erste Durchlaßbereich aufweist.

2. Verfahren nach Anspruch 1,
dadurch gekennzeichnet,
daß der zweite Kraftstoffdurchlaßbereich durch eine elektrochemische Bearbeitung (ECM) oder elektrische Entladungsbearbeitung (EDM) hergestellt wird.

3. Verfahren nach Anspruch 1 oder 2,
dadurch gekennzeichnet,
daß der erste Kraftstoffdurchlaßbereich vor dem zweiten Kraftstoffdurchlaßbereich hergestellt wird.

4. Verfahren nach einem der vorausgehenden Ansprüche,
dadurch gekennzeichnet,
daß der zweite Kraftstoffdurchlaßbereich (31, 36) gerade hergestellt wird.

5. Verfahren nach einem der vorausgehenden Ansprüche,
dadurch gekennzeichnet,
daß der Ventilkörper einstückig hergestellt wird.

## Revendications

1. Procédé de fabrication d'un corps de buse d'injection de carburant destiné à un moteur à combustion interne, le corps de buse (30) comportant :
une pointe de corps de buse (5) comportant au moins un trou de pulvérisation (20),
un perçage s'étendant à partir d'une face terminale (8) du corps, en direction de la pointe du corps de buse, le perçage présentant des première (40) et deuxième parties connectées par une partie évidée (32), la première partie s'étendant à partir de la face terminale et
un passage pour l'alimentation en carburant comprenant des première et deuxième parties de passage du carburant, la première partie de passage du carburant (33, 34) étant droite et s'étendant à partir d'une ouverture ménagée dans la face terminale et la deuxième partie de passage du carburant (31) s'étendant à partir de la partie de perçage évidée, pour entrecouper la première partie de passage du carburant, l'intersection incluant la portion de la deuxième partie de passage du carburant qui est la plus proche de la face terminale,
caractérisé en ce que la deuxième partie de passage du carburant (31), (36) est formée à partir de l'intérieur de la partie de perçage évidée et a une section transversale circulaire et une superficie de section similaire à celle de la première partie de passage.

2. Procédé selon la revendication 1, dans lequel la deuxième partie de passage du carburant est formée par usinage électrochimique (ECM) ou par usinage par étincelage (EDM).

3. Procédé selon la revendication 1 ou 2, dans lequel la première partie de passage du carburant est formée avant la deuxième partie de passage du carburant.

4. Procédé selon l'une quelconque des revendications précédentes, dans lequel la deuxième partie de passage pour l'alimentation en carburant (31), (36) est droite.

5. Procédé selon l'une quelconque des revendications précédentes, dans lequel le corps de buse est fabriqué d'une seule pièce.
